# EUROPEAN PATENT APPLICATION

(11) **EP 4 389 366 A1**
(43) Date of publication of application: **26.06.2024**
(21) Application number: 23203510.5
(22) Date of filing: 13.10.2023
(51) Int. Cl.: B25J 11/00, B25J 15/00, B25J 15/06, B23B 49/02, B64F 5/10, B23Q 9/00

(54) **SYSTEMS AND METHODS FOR AUTOMATED PROCESSING OF A WORKPIECE**

(30) Priority: 19.12.2022 US 202218068103
(71) Applicant: The Boeing Company, Arlington, VA 22202 (US)
(72) Inventor: Cardon, Lisa A., Arlington, 22202 (US); Babst, Joshua A., Arlington, 22202 (US); Locke, Alan S., Arlington, 22202 (US); Crivella, Michelle, Arlington, 22202 (US); Reid, Eric, Arlington, 22202 (US)
(74) Representative: Witte, Weller & Partner Patentanwälte mbB

(57) **Abstract**

A system for processing a workpiece includes a robotic manipulator and an end effector coupled to a working end of the robotic manipulator. The end effector includes a machine tool and an end-effector vacuum clamp that is coupled to the machine tool. The end effector is releasably coupleable to a surface of the workpiece. A processing force is reacted through the end effector and to the workpiece.

## Description

### FIELD

The present disclosure relates generally to machining operations and, more particularly, to systems and methods for automated processing of a workpiece.

### BACKGROUND

Various processing operations are performed on a workpiece during manufacture. Many of these operations are performed using automated machines that are designed to interact with the environment and the workpiece. As an example, an automated machine may include an automated manipulator, such as a robotic arm or overhead gantry, and an end effector attached to the automated manipulator that interacts with the workpiece. The exact configuration of the machine may depend on the particular application and/or process being performed on the workpiece. However, in most circumstances, in order for an automated machine to reach or otherwise access an entirety of a large workpiece, the machine must be large. Additionally, in order for an automated machine to be capable of performing a high-force operation, the machine must be robust. Accordingly, systems and methods intended to address the above-identified concerns would find utility. Therefore, those skilled in the art continue with research and development efforts in the field of automated processing of workpieces.

### SUMMARY

Disclosed are examples of a system for processing of a workpiece, an end effector for processing of a workpiece, and a method for processing a workpiece. The following is a non-exhaustive list of examples, which may or may not be claimed, of the subject matter according to the present disclosure.

In an example, the disclosed system includes a robotic manipulator that includes a working end. The system also includes an end effector that is coupled to the working end of the robotic manipulator. The end effector includes a machine tool and an end-effector vacuum clamp that is coupled to the machine tool. The end effector is releasably coupleable to a surface of a workpiece. A processing force is reacted through the end effector and to the workpiece.

In an example, the disclosed end effector includes a machine tool and an end-effector vacuum clamp that is coupled to the machine tool. The end-effector vacuum clamp is releasably coupleable to a surface of a workpiece. A processing force is reacted through the end effector and into the workpiece.

In an example, the disclosed method includes steps of: (1) positioning an end effector relative to a processing location on a surface of a workpiece; (2) coupling the end effector to the surface of the workpiece; (3) processing the workpiece at the processing location using a machine tool of the end effector; and (4) reacting a processing force through the end effector and to the workpiece.

Other examples of the disclosed system, end effector, and method will become apparent from the following detailed description, the accompanying drawings, and the appended claims.

### BRIEF DESCRIPTION OF THE DRAWINGS

Fig. 1 is a schematic block diagram of an example of a system for automated processing of a workpiece;
Fig. 2 is a schematic, perspective view of an example of the system and a workpiece;
Fig. 3, is a schematic, perspective view of an example of an end effector of the system;
Fig. 4 is a schematic, side view of an example of the end effector;
Fig. 5 is a schematic, top view of an example of the end effector;
Fig. 6 is a schematic, bottom view of an example of the end effector;
Fig. 7 is a schematic, top view of an example of the end effector;
Fig. 8 is a schematic, perspective view of an example of the end effector;
Fig. 9 is a schematic, perspective view of an example of the end effector;
Fig. 10 is a schematic, side view of an example of the end effector;
Fig. 11 is a schematic, partially exploded, perspective view of an example of the end effector;
Fig. 12 is a schematic, perspective view of an example of a base of the system;
Fig. 13 is a schematic, perspective view of an example of the system;
Fig. 14 is a schematic illustration of an example of the system;
Fig. 15 is a schematic illustration of an example of the system;
Fig. 16 is a schematic illustration of an example of the system;
Fig. 17 is a flow diagram of an example of a method for automated processing of a workpiece;
Fig. 18 is a flow diagram of an example of an aircraft manufacturing and service method; and
Fig. 19 is a schematic illustration of an example of an aircraft.

### DETAILED DESCRIPTION

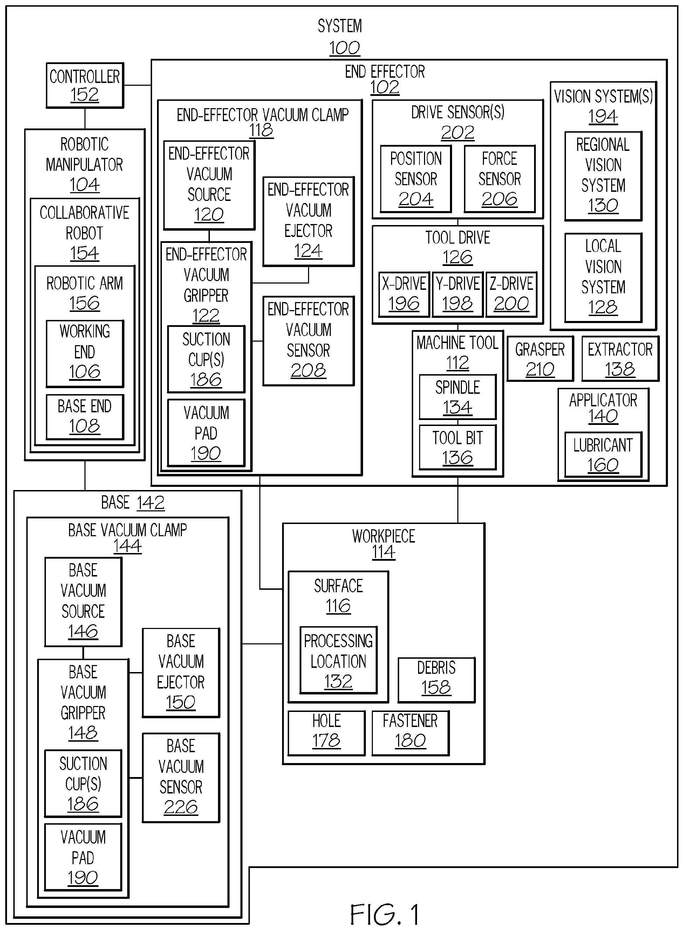

Referring to Figs. 1-17, by way of examples, the present disclosure is directed to systems and methods for automated processing of a workpiece. Generally, the systems and methods described herein enable small and lightweight machines to perform one or more machining or other processing operations that typically require larger and more robust machines by reacting processes back to a workpiece. In one or more examples, the processing operation includes drilling holes in a workpiece. In one or more examples, the processing operation includes removing fasteners from a workpiece. In one or more examples, the processing operation includes determining a location for the processing operation, such as a drilling location or a fastener location, and properly locating a machine tool relative to the processing location for performance of the processing operation.

Referring to Fig. 1, in one or more examples, a workpiece 114 is, includes, or takes the form of any manufactured component, part, object, or article upon which a machining operation is performed during manufacture. In an aerospace example, the workpiece 114 is an aircraft wing or a component or subassembly thereof, such as a wing box or a wing skin panel. However, in other examples, the workpiece 114 can be any other structure or component.

The present disclosure recognizes that relatively large workpieces, such as those forming a portion of an aircraft (e.g., a wing, a fuselage, etc.), require large and robust machines to perform automated processing operations, such as drilling holes, removing fasteners, and the like. Large and robust machines are needed to reach all necessary portions of the workpiece, to manipulate heavy machine tools, and to react the high processing forces generated during machining operations. The present disclosure also recognizes the advantages of providing systems and methods capable of performing automated processing operations using smaller and lighter-weight machines.

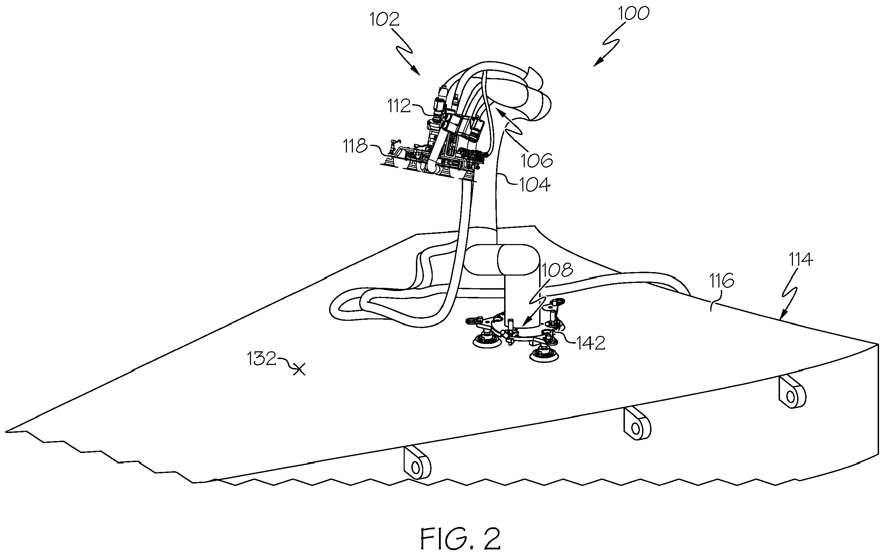

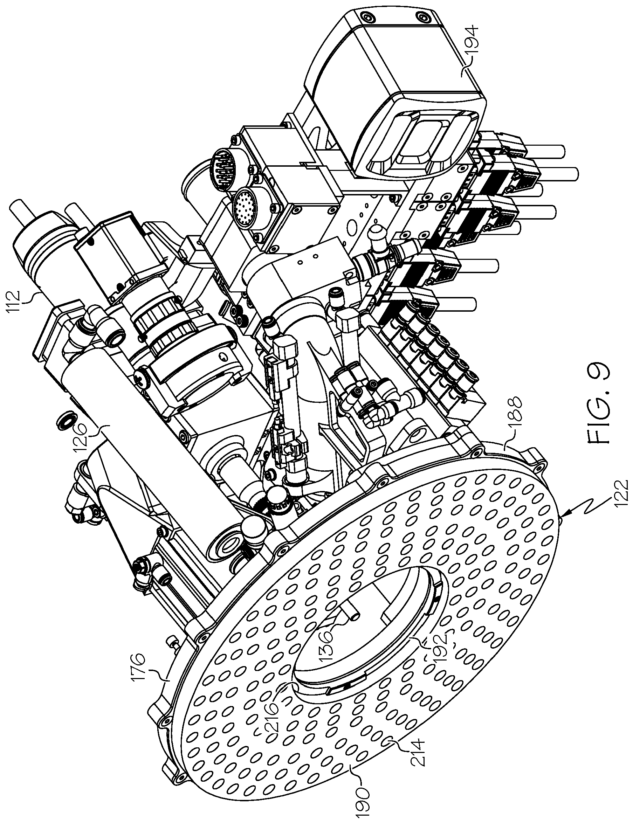

Referring to Figs. 1 and 2, which illustrate examples of a system 100 for automated processing of the workpiece 114. The system 100 facilitates automated processing of the workpiece 114 using smaller and lighter-weight machines and tools by reacting processing forces and loads back into the workpiece 114. In one or more examples, the system 100 is configured to machine (e.g., drill or otherwise cut) holes 178 in the workpiece 114 (e.g., as shown in Figs. 2-6). In one or more examples, the system 100 is configured to removes fasteners 180 from the workpiece 114 (e.g., as shown in Figs. 9-11). In other examples, the system 100 is configured to perform other processing operations, such as machining, cutting, trimming, routing, sanding, polishing, fastener installing, and the like.

Referring to Fig 1 and to Fig. 2, in one or more examples, the system 100 includes a robotic manipulator 104. The robotic manipulator 104 includes a working end 106 (Fig. 1). The system 100 also includes an end effector 102. The end effector 102 is coupled to the working end 106 of the robotic manipulator 104. The end effector 102 includes a machine tool 112 and an end-effector vacuum clamp 118. The end effector 102 is releasably coupleable to (e.g., is configured to be selectively coupled to and decoupled from) a surface 116 of the workpiece 114. A processing force Fp is reacted through the end effector 102 and to the workpiece 114.

In one or more examples, the end-effector vacuum clamp 118 is coupled to the machine tool 112. As an example, the machine tool 112 and the end-effector vacuum clamp 118 are integrated into a unitary structure that forms the end effector 102.

The robotic manipulator 104 support, moves, and positions the end effector 102 in a manufacturing environment and relative to the workpiece 114. Coupling the end effector 102 to the surface 116 of the workpiece 114 using the end-effector vacuum clamp 118 enables the processing force Fp to be reacted by the end effector 102 and transferred back to the workpiece 114, thereby, reducing the required robustness of the robotic manipulator 104, the end effector 102, and the machine tool 112. The machine tool 112 performs one or more machining operations on the workpiece 114 once the end effector 102 is coupled to the surface 116 of the workpiece 114.

The processing force Fp represents one or more of forces produced during the processing operation. As used herein, "processing" refers to performing a material processing operation to fabricate, machine, cut, drill, assembly, disassemble, or otherwise finish a workpiece to a desired final condition, such as by controlling material removal or surface finishing. The processing operations includes any suitable operation performed on the workpiece 114 and, more particularly, to the surface 116 of the workpiece 114, such as, but not limited to, drilling, cutting, trimming, routing, installing fasteners (e.g., temporary or permanent), removing fasteners, sanding, polishing, and the like. The processing operation is performed by the machine tool 112, which is placed in contact with the workpiece 114. During the processing operation, the machine tool 112 applies (e.g., exerts) an action force upon the workpiece 114. Generally, the action force is parallel to or coincident with a processing axis Ap of the machine tool 112. The workpiece 114 applies (e.g., exerts) a reaction force upon the machine tool 112. The reaction force is equal and opposite to the action force.

Fig. 2 illustrates an example of the system 100 positioned relative to the workpiece 114 in preparation to commencement of the processing operation. The robotic manipulator 104 moves and appropriately positions the end effector 102 (e, g., the machine tool 112 and the end-effector vacuum clamp 118) relative to the workpiece 114 and, more particularly, relative to a processing location 132 on the surface 116 of the workpiece 114. The processing location 132 refers to a location on the surface 116 of the workpiece 114 upon which a processing operation (e.g., drilling the hole 178 or removing the fastener 180) is to be performed. As illustrated in Fig. 2, in one or more examples, the robotic manipulator 104 is, includes, or takes the form of any suitable programmable machine or programmable mechanical arm, such as a robotic arm 156.

Referring to Fig. 1, in one or more examples, the robotic manipulator 104 is or includes a collaborative robot 154. The collaborative robot 154, also referred to as a cobot, is a robot intended for direct human-robot interaction within a shared space or where humans and robots are in close proximity. The collaborative robot 154 relies on lightweight construction materials, inherent limitation of speed and force, and/or sensors and software to ensure safe behavior.

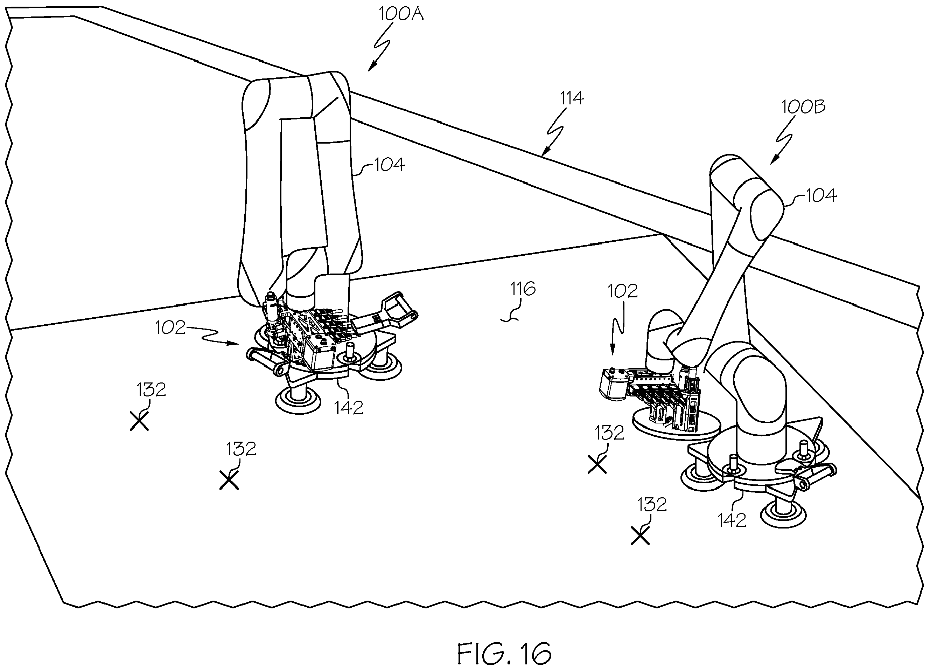

Referring to Figs. 1 and 16, use of smaller automated machines, such as the collaborative robot 154, equipped with the end effector 102 and enabled to react the processing force Fp back to the workpiece 114 itself using the end effector 102, facilitate use of more than one system 100 (e.g., a first system 100A and a second system 100B shown in Fig. 16) working in collaboration with one another. Further, utilization of the collaborative robot 154, facilitates use of more than one system 100 (e.g., the first system 100A and the second system 100B) working in collaboration with one another and with a human operator in the same manufacturing environment or workspace. In one or more examples, use of smaller automated machines, such as the collaborative robot 154, equipped with the end effector 102 and enabled to react the processing force Fp back to the workpiece 114 itself using the end effector 102, facilitate ease of movement of the robotic manipulator 104 and positioning of the robotic manipulator 104 relative to a desired one of a plurality of processing locations 132 on the workpiece 114.

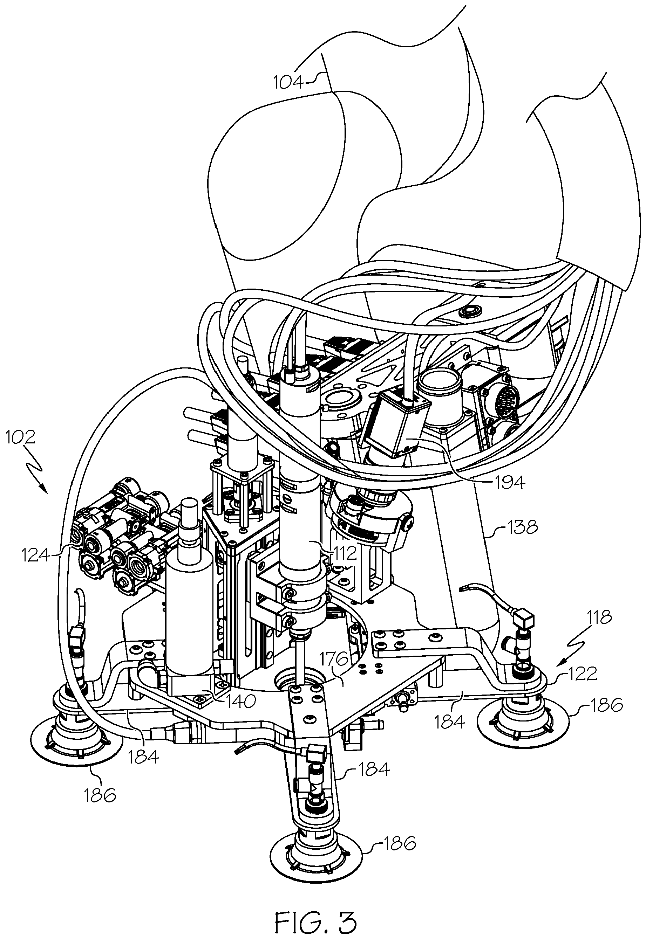

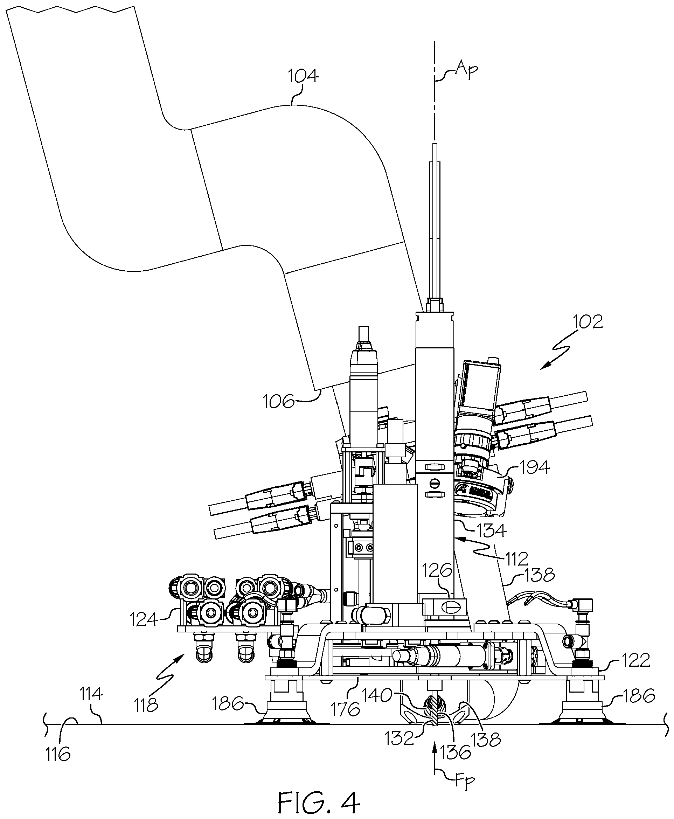

Referring to Figs. 1 and 2 and to Figs. 3-11, in one or more examples, the end-effector vacuum clamp 118 enables the end effector 102 to be coupled to the surface 116 of the workpiece 114. Coupling the end effector 102 to the workpiece 114 enables the process force Fp (Fig. 4), applied to the machine tool 112 by the workpiece 114 during the processing operation, to be reacted by the end effector 102 and transferred back to the workpiece 114. Reacting the process force Fp back to the workpiece 114 via the end effector 102 coupled to the workpiece 114 reducing the required robustness of the robotic manipulator 104.

The end-effector vacuum clamp 118 includes or utilizes any suitable vacuum technology used to bind two items together and hold them firmly. Generally, the end-effector vacuum clamp 118 removes atmosphere (e.g., air) from between the end effector 102 and the workpiece 114 such that the atmosphere around the outside of the end effector 102 holds the end effector 102 in place.

Referring to Fig. 1 and to Figs. 3-11, in one or more examples, the end-effector vacuum clamp 118 includes an end-effector vacuum source 120 (Fig. 1). The end-effector vacuum clamp 118 also includes at least one instance of an end-effector vacuum gripper 122. The end-effector vacuum gripper 122 is coupled to and is in in fluid communication with the end-effector vacuum source 120, such as via airlines. The end-effector vacuum source 120 includes any device or mechanism configured to generate a flow of air and remove air from a space between the end-effector vacuum gripper 122 and the surface 116 of the workpiece 114, such as a vacuum pump. The end-effector vacuum gripper 122 include any suitable vacuum or suction gripper, such as flexible grippers, suction cups or vacuum cups, suction pads or vacuum pads, and the like.

Referring to Fig. 1 and to Figs. 3-11, in one or more examples, the end-effector vacuum clamp 118 includes a frame 176 that is coupled to or that otherwise extends outward from the machine tool 112. The frame 176 supports the end-effector vacuum gripper 122.

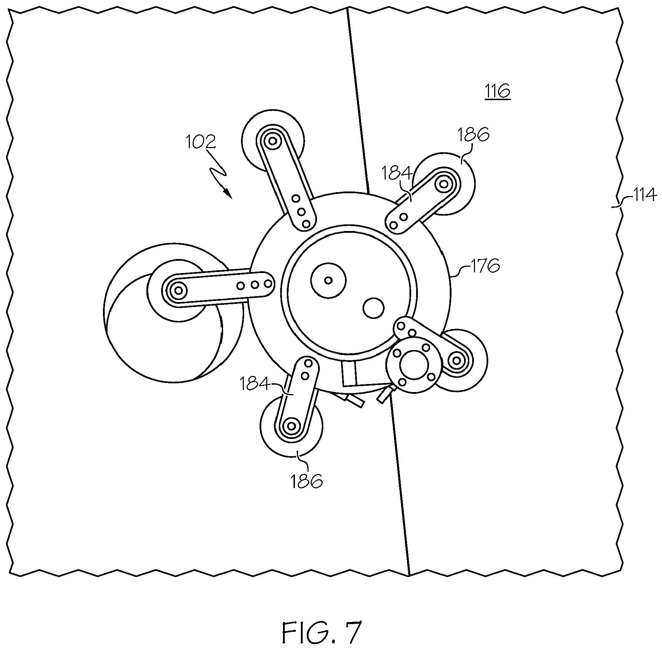

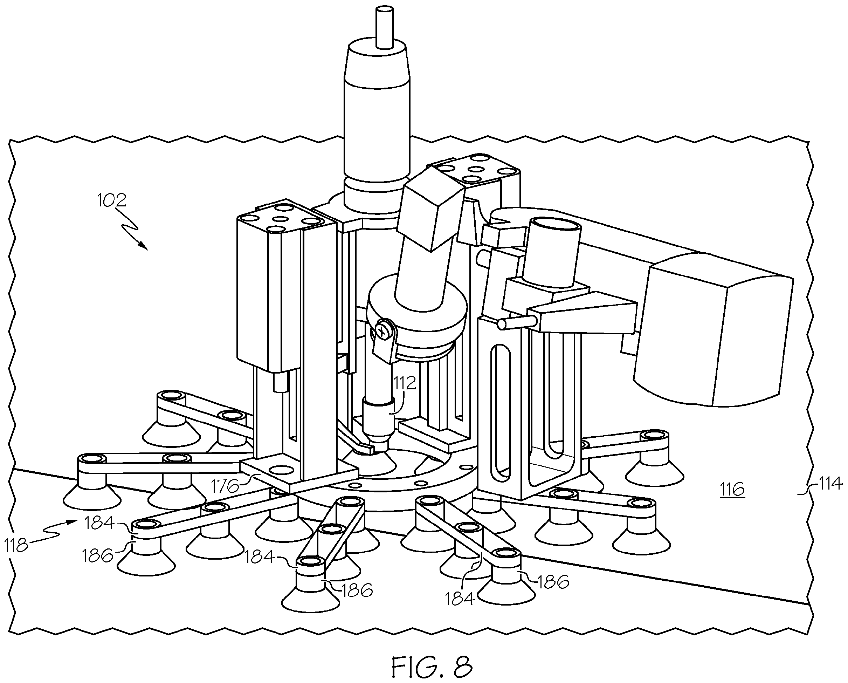

Referring to Fig. 1 and to Figs. 3-8, in one or more examples, the frame 176 includes a plurality of legs 184 and the end-effector vacuum gripper 122 includes a plurality of suction cups 186. At least one of the suction cups 186 is coupled to each one of the legs 184. The frame 176 can include any number of legs 184, such as four of the legs 184 (e.g., as shown in Figs. 3-6) or more than four of the legs 184 (e.g., as shown in Figs. 7 and 8). Any suitable number of the suction cups 186 can be coupled to or extend from each one of the legs 184, such as one of the suction cups 186 (Fig. 3-7) or more than one of the suction cups 186 (Fig. 8).

Referring to Fig. 1 and to Figs. 9-11, in one or more examples, the frame 176 includes vacuum platform 188 and the end-effector vacuum gripper 122 includes a vacuum pad 190. The vacuum pad 190 is coupled to the vacuum platform 188. The vacuum platform 188, such as a vacuum table, includes a plurality of vacuum ports 212. The vacuum ports 212 of the vacuum platform 188 are in fluid communication with the end-effector vacuum source 120. The vacuum pad 190 includes a plurality of vacuum apertures 214 aligned and in fluid communication with the plurality of vacuum ports 212. The vacuum pad 190 is made of a compressible material.

Referring to Fig. 1 and to Figs. 3-11, in one or more examples, the frame 176 supports the machine tool 112 and the end-effector vacuum clamp 118. In one or more examples, the frame 176 is coupled to the working end 106 of the robotic manipulator 104, for example, by a robot quick change coupling. In one or more examples, the machine tool 112 is coupled to and is supported by the frame 176. In one or more examples, the end-effector vacuum gripper 122 is coupled to or extends from the frame 176. In one or more examples, other operational components of the system 100 or the end effector 102 are coupled to and/or are supported by the frame 176.

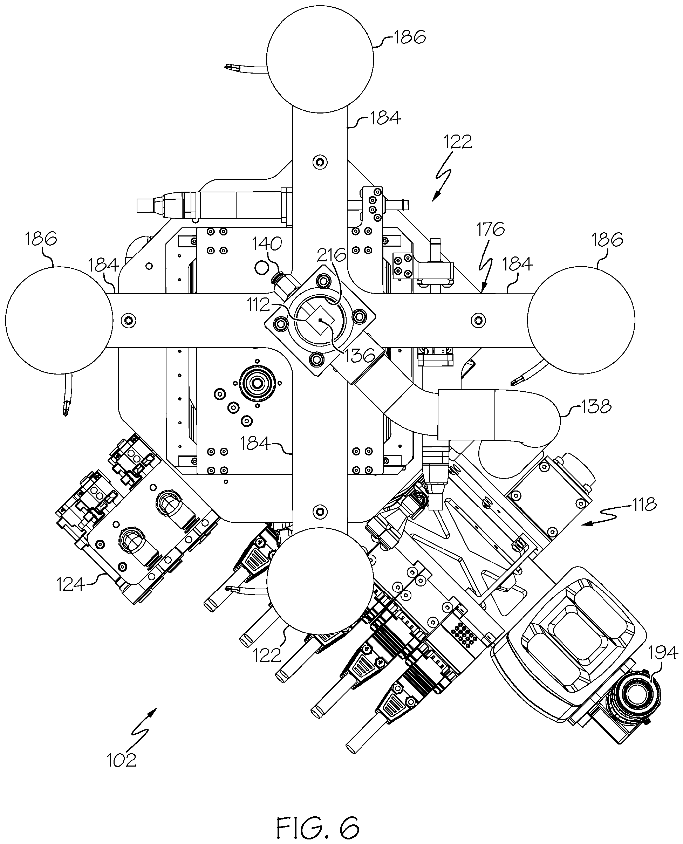

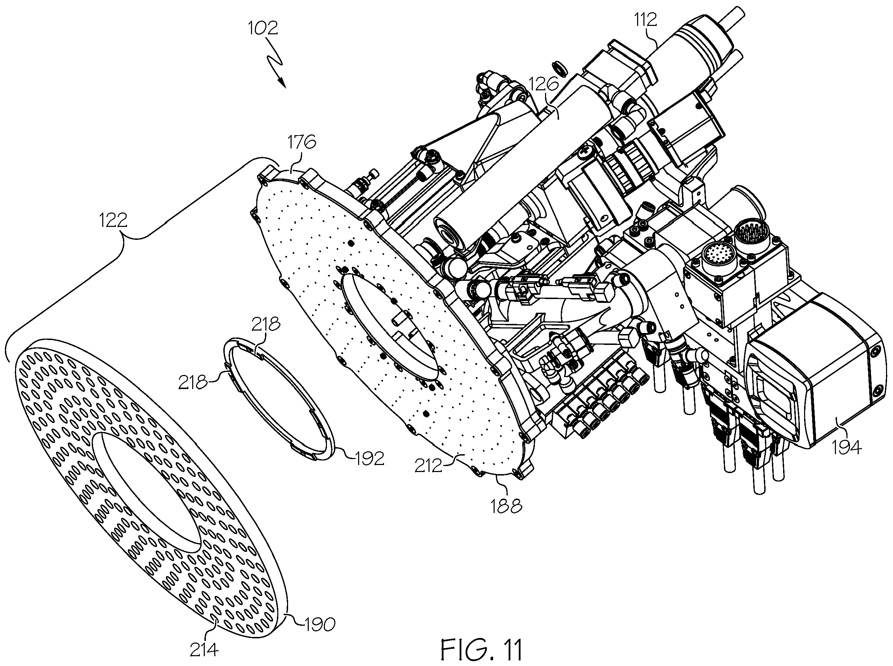

Referring to Figs. 6 and 9, in one or more examples, the frame 176 of the end effector 102 includes or forms an opening 216 that provides access to the surface 116 of the workpiece 114. Generally, during the processing operation, at least a portion of the machine tool 112 (e.g., the tool bit 136) extends through the opening 216 to engage the workpiece 114. In one or more examples, as illustrated in Fig. 6, the legs 184 extend radially from the opening 216. In one or more examples, as illustrated in Fig. 11, the vacuum platform 188 includes the opening 216 and the vacuum pad 190 is annular in shape and circumscribes or is concentric to the opening 216. For example, an opening of the annular shape of the vacuum pad 190 is aligned with an opening of the annular shape of the vacuum platform 188 and, in combination, form the opening 216.

Referring to Fig. 1 and to Figs. 9 and 11, in one or more examples, the end effector 102 includes a contact pad 192. The contact pad 192 is configured to maintain normality between the end effector 102 and the surface 116 of the workpiece 114.

Referring to Fig. 11, in one or more examples, the contact pad 192 includes a plurality of contact points 218. In one or more examples, the contact pad 192 includes at least three of the contact points 218. In one or more examples, the contact pad 192 includes more than three, such as four, of the contact points 218.

The contact points 218 are configured to contact the surface 116 of the workpiece 114 during or upon vacuum clamping of the end effector 102 to the surface 116. The contact points 218 of the contact pad 192 ensure and maintain the end effector 102 at a normal (e.g., approximately perpendicular) orientation relative to the surface 116 such that the machine tool 112 is normal to the surface 116 during processing.

In one or more examples, the contact pad 192 is annular in shape and circumscribes or is concentric to the opening 216. In one or more examples, the contact pad 192 is coupled to the vacuum platform 188 and is located within the opening of the annular shape of the vacuum pad 190. During vacuum clamping, the vacuum pad 190 compresses between the frame 176 of the end effector 102 (e.g., the vacuum platform 188) and the surface 116 of the workpiece 114. Before full compression, the contact pad 192 contacts the surface 116, between the surface 116 and the frame 176. The smaller dimension (e.g., diameter) of the contact pad 192 compared to the dimension (e.g., diameter) of the vacuum pad 190 reduces the impact of surface contours on normalcy of the end effector 102.

Referring to Fig. 1, in one or more examples, the end effector 102 includes an end-effector vacuum sensor 208. The end-effector vacuum sensor 208 is configured to detect vacuum pressure and determine whether a sufficient vacuum is formed between the end-effector vacuum gripper 122 and the surface 116 of the workpiece 114 for commencement of the processing operation. In one or more examples, the end-effector vacuum sensor 208 is a pressure sensor or transducer.

Referring to Fig. 1 and to Figs. 4-6, in one or more examples, the end-effector vacuum clamp 118 includes an end-effector vacuum ejector 124. The end-effector vacuum ejector 124 is coupled to and in fluid communication with the end-effector vacuum gripper 122, such as via air lines. The end-effector vacuum ejector 124 is configured to reverse a flow of air to the end-effector vacuum gripper 122 to release or "break" the vacuum connection between the end-effector vacuum gripper 122 and the surface 116 of the workpiece 114.

Referring to Fig. 1 and to Figs. 4-6, in one or more examples, the system 100 includes a tool drive 126. The tool drive 126 positions (e.g., is configured to position) the processing axis Ap of the machine tool 112 relative to the end-effector vacuum clamp 118 and relative to the processing location 132 on the surface 116 of the workpiece 114. The tool drive 126 includes any suitable linear drive mechanism or linear actuator that controls linear motion of the machine tool 112 relative to the end effector 102 (e.g., relative to the end-effector vacuum clamp 118) and relative to the surface 116 of the workpiece 114. Generally, the processing axis Ap refers to an axis along which the machine tool 112 operates. As an example, during the machining operation, the machine tool 112 moves in a feed direction along a feed axis, which is substantially normal to the surface 116. In one or more examples, the feed axis is parallel to or coincident with the processing axis Ap. As another example, such as for rotary machine tools (e.g., a drill or impact driver), the machine tool 112 rotates about a rotation axis. In one or more examples, the rotation axis is parallel to or coincident with the processing axis Ap. In one or more examples, the tool drive 126 includes at least one motor or drive mechanism that moves the machine tool 112 in a direction parallel to the processing axis Ap (e.g., a Z-axis drive 200 shown in Fig. 1). In one or more examples, the tool drive 126 includes at least one motor or drive mechanism that moves the machine tool 112 in one or more directions perpendicular to the processing axis Ap (e.g., an X-axis drive 196 and/or a Y-axis drive 198 shown in Fig. 1). In one or more examples, the tool drive 126 includes one or more servomotors. In one or more examples, the X-axis drive 196, the Y-axis drive 198, and the Z-axis drive 200 are discrete drive mechanisms. In one or more examples, the X-axis drive 196 and the Y-axis drive 198 are integrated into a single drive mechanism.

In one or more examples, the tool drive 126, such as the X-axis drive 196, the Y-axis drive 198, and/or the Z-axis drive 200 is a linear actuator, such as an electromechanical actuator, a pneumatic actuator, or a hydraulic actuator. In one or more examples, the tool drive 126, such as the Z-axis drive 200 is a variable force actuator that is configured to or capable of applying variable force to the machine tool 112 while moving along the Z-axis.

In one or more examples, the end effector 102 includes a one drive sensor 202. The drive sensor 202 is configured to detect one or more motion parameters of the machine tool 112. In one or more examples, the drive sensor 202 includes a position sensor 204. The position sensor 204 is configured to determine or detect a relative location of the machine tool 112 along the Z-axis (e.g., along the processing axis Ap) as driven by the Z-axis drive 200. In one or more examples, the position sensor 204 is a linear transducer that detects stroke position. In one or more examples, the drive sensor 202 includes a force sensor 206. The force sensor 206 is configured to determine or detect a force applied to the workpiece 114 during the processing operation, such as a force applied to the fastener 180 while removing the fastener 180. In one or more examples, the force sensor 206 is a load cell.

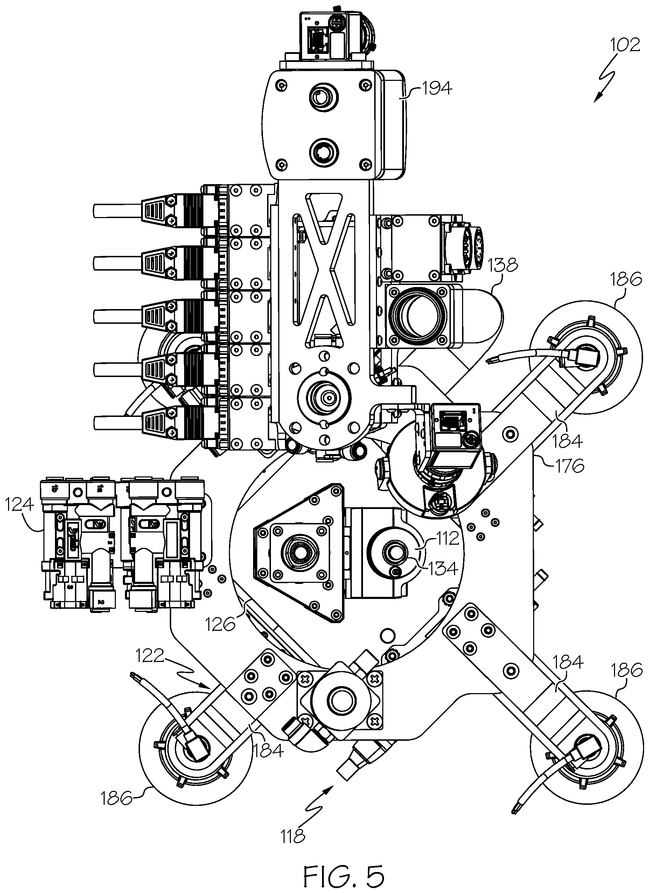

Referring to Fig. 1 and to Figs. 5, 6, 9 and 11, in one or more examples, the system 100 includes one or more vision systems 194. The one or more vision systems 194 enable determining relative locations of the end effector 102 and, optionally, other machine vision-based determinations.

Referring to Fig. 1, in one or more examples, the vision systems 194 includes a local vision system 128 (e.g., a first vision system). The local vision system 128 determines (e.g., is configured to determine) a location of the processing axis Ap relative to the processing location 132 on the surface 116 of the workpiece 114. Generally, with the end effector 102 coupled to the workpiece 114, the local vision system 128 is configured to determine (e.g., detect) a position of the processing location 132 relative to the end effector 102 and/or the machine tool 112. The local vision system 128 is also configured to monitor a linear position of the machine tool 112 and, more particularly, the processing axis Ap, relative to the end effector 102 and the processing location 132 on the workpiece 114 prior to and/or during the machining operation. The local vision system 128 provides micro (e.g., fine or small scale) location information of the processing axis Ap relative to the processing location 132. For example, the location information acquired and generated by the local vision system 128 is used to generate motion control directions for the tool drive 126 prior to and/or during the machining operation. The local vision system 128 includes any suitable digital sensor or vision sensor, such as a camera, that acquires images of an object and uses the captured images to determine location, orientation, and accuracy of the object.

Referring to Fig. 1, in one or more examples, the vision systems 194 includes a regional vision system 130 (e.g., a second vision system). The regional visions system 130 determines (e.g., is configured to determine) a location of the end effector 102 relative to the processing location 132 on the surface 116 of the workpiece 114. Generally, before the end effector 102 is coupled to the workpiece 114, the regional vision system 130 is configured to determine (e.g., detect) a position of the processing location 132 relative to robotic manipulator 104. The regional vision system 130 is also configured to monitor a position (e.g., location and orientation) of the end effector 102 relative to the workpiece 114 and, more particularly, the processing location 132 on the workpiece 114 prior to coupling the end effector 102 to the workpiece 114. The regional vision system 130 provides macro (e.g., large scale) location information of the end effector 102 relative to the processing location 132. For example, the location information acquired and generated by the regional vision system 130 is used to generate motion control directions for the robotic manipulator 104 to properly position the end effector 102 for coupling. The regional vision system 130 includes any suitable digital sensor or vision sensor, such as a camera, that acquires images of an object and uses the captured images to determine location, orientation, and accuracy of the object.

Referring to Fig. 1, in one or more examples, the machine tool 112 is a rotary machine tool. As an example, the machine tool 112 includes a spindle 134. The machine tool 112 also includes a tool bit 136 that is coupled to the spindle 134. The spindle 134 includes a shaft, a rotary drive (e.g., motor) that rotates the shaft about the rotation axis of the machine tool 112, suitable bearings, and a chuck or other tool clamp that secures the tool bit 136. In one or more examples, the machine tool 112 also includes a rotary encoder that that converts an angular position or motion of the shaft to analog or digital output signals, which can be provided to a controller 152 for rotational control of the machine tool 112. In one or more examples, rotary drive is a servomotor. The rotary encoder and the controller 152 enable the setting of torque limits, the monitoring of rotational velocity, the monitoring of rotational position, and the like.

In an example, the machine tool 112 is, includes, or takes the form of a drill and the tool bit 136 is a drill bit. In these examples, the drill is used to drill the hole 178 in the workpiece 114. In another example, the machine tool 112 is, includes, or takes the form of an impact driver and the tool bit 136 is a driver bit. In these examples, the impact driver is used to remove the fastener 180 from the workpiece 114. Other rotary machine tools are also contemplated. In other examples, the machine tool 112 is a non-rotary machine tool that is used for cutting, shaping, or finishing the workpiece 114.

Referring to Fig. 1 and to Figs. 4-6 and 10, in one or more examples, the system 100 includes an extractor 138. In one or more examples, the extractor 138 collects and removes (e.g., is configured to remove) debris 158 produced during processing, such as the debris 158 formed during drilling the hole 178. In one or more examples, the extractor 138 collects and removes the fastener 180 after the fastener 180 is removed from the workpiece 114 by the machine tool 112.

In one or more examples, the extractor 138 is or includes a vacuum system that creates suction to remove the debris 158 produced during the drilling operation or the fastener 180 removed during the defastening operation. In one or more examples, the extractor 138 includes a tube or hose that is connected to and in fluid communication with an electric motor that creates the suction (e.g., an additional vacuum source). With the end effector 102 coupled to the workpiece 114, an end or input opening of the extractor 138 is located proximate (e.g., at or near) the processing location 132 to collect and remove the debris 158 and/or the fastener 180.

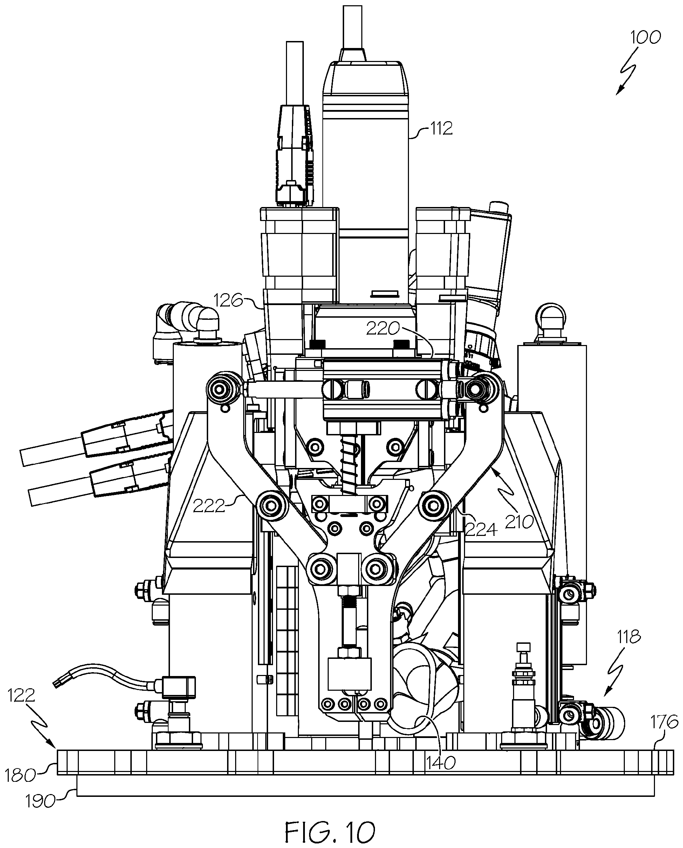

Referring to Fig. 10, in one or more examples, the system 100 also includes a grasper 210. The grasper 210 is configured to grasp or otherwise grip the fastener 180 after the fastener 180 is loosened or otherwise defastened from the workpiece 114, remove the fastener 180 from the workpiece 114, and suitably position the fastener 180 proximate to the input opening of the extractor 138 for removal by the extractor 138. In one or more examples, the grasper 210 includes an actuator 220, a first finger 222 coupled to the actuator 220, and a second finger 224 coupled to the actuator 220. The actuator 220 moves the first finger 222 and the second finger 224 between an open position and a closed position for grasping the fastener 180 between ends of the first finger 222 and the second finger 224.

Referring to Fig. 1 and to Figs. 4-6, in one or more examples, the system 100 includes an applicator 140. The applicator 140 dispenses (e.g., is configured to dispense) lubricant 160. The lubricant 160 is any suitable substance that reduces friction between the tool bit 136 (e.g., the drill bit) and the workpiece 114 during processing, such as drilling. In one or more examples, the applicator 140 is or includes a pump that injects, sprays, or otherwise dispenses the lubricant 160 during the machining operation. In one or more examples, the applicator 140 includes a tube that is connected to and in fluid communication with the pump and a lubricant source. With the end effector 102 coupled to the workpiece 114, an end of the applicator 140 is located proximate (e.g., at or near) the processing location 132 to provide the lubricant 160 to the tool bit 136.

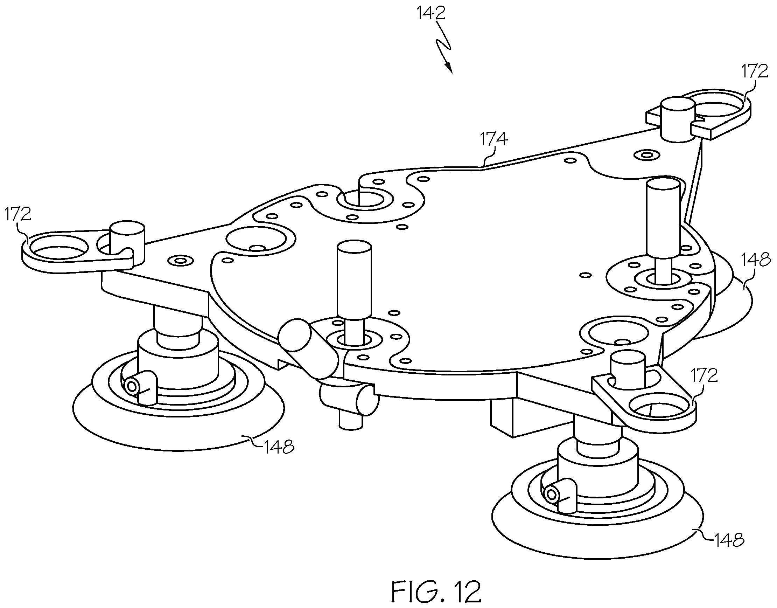

Referring to Fig. 1 and 2 and to Figs. 12-16, in one or more examples, the system 100 includes a base 142. The robotic manipulator 104 includes a base end 108, which is opposite the working end 106. The base end 108 of the robotic manipulator 104 is coupled to the base 142. The base 142 is movable relative to the workpiece 114. The base 142 supports the robotic manipulator 104. The base 142 also fixes the robotic manipulator 104 during positioning of the end effector 102 and coupling the end effector 102 to the surface 116 of the workpiece 114. In some examples, the base 142 also facilitates movement of the robotic manipulator 104 relative to the workpiece 114.

Referring to Fig. 1 and to Figs. 2, 12 and 13, in one or more examples, the base 142 is releasably coupleable to (e.g., is configured to be selectively coupled to and decoupled from) the surface 116 of the workpiece 114. Coupling the base 142 to the surface 116 of the workpiece 114 enables the robotic manipulator 104 and, thus, the end effector 102 to be easily positioned at any desired location on the workpiece 114 for processing.

Referring to Fig. 1 and to Figs. 2, 12 and 13, in one or more examples, the base 142 includes a base vacuum clamp 144. The base vacuum clamp 144 enables the base 142 to be coupled to the surface 116 of the workpiece 114. Coupling the base 142 to the workpiece 114 provides expanded flexibility to the system 100.

The base vacuum clamp 144 includes or utilizes any suitable vacuum technology used to bind two items together and hold them firmly. Generally, the base vacuum clamp 144 removes atmosphere (e.g., air) from between the base 142 and the workpiece 114 such that the atmosphere around the outside of the base 142 holds the base 142 in place.

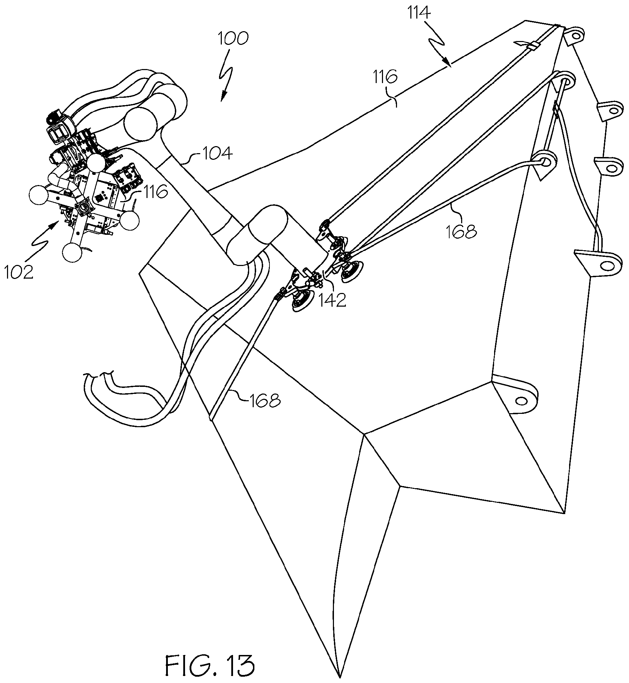

Referring to Fig. 1 and to Figs. 12 and 13, in one or more examples, the base vacuum clamp 144 includes a base vacuum source 146. The base vacuum clamp 144 also includes a base vacuum gripper 148. The base vacuum gripper 148 is coupled to and in fluid communication with the base vacuum source 146, such as via airlines. The base vacuum source 146 includes any device or mechanism configured to generate a flow of air and remove air from a space between the base vacuum gripper 148 and the surface 116 of the workpiece 114, such as a vacuum pump. The base vacuum gripper 148 include any suitable vacuum gripper or suction gripper, such as flexible grippers, suction cups or vacuum cups (e.g., suction cups 186), suction pads or vacuum pads (e.g., vacuum pad 190), and the like.

The base vacuum clamp 144 enables selective coupling of the base 142 and, thus, the base end 108 of the robotic manipulator 104 to any suitable desired location on the surface 116 of the workpiece 114. Further, as illustrated in Fig. 13, the base vacuum clamp 144 enables the base 142 and, thus, the robotic manipulator 104 to be coupled to surface 116 of the workpiece 114 when the surface 116 is not in a substantially horizontal orientation. In one or more examples, the surface 116 can have any orientation relative to horizontal up to and including a substantially vertical orientation and the base 142 enables the robotic manipulator 104 to be coupled to the surface 116. Additionally, the base 142 enables the robotic manipulator 104 to be coupled to an underside or underneath surface of the workpiece 114 such that both major surfaces or all sides of the workpiece 114 can be machined or otherwise processed without significant reorientation of the workpiece 114.

Referring to Fig. 1, in one or more examples, the base 142 includes a base vacuum sensor 226. The base vacuum sensor 226 is configured to detect vacuum pressure and determine whether a sufficient vacuum is formed between the base vacuum gripper 148 and the surface 116 of the workpiece 114 for commencement of the processing operation. In one or more examples, the base vacuum sensor 226 is a pressure sensor or transducer.

As illustrated in Fig. 12, in one or more examples, the base 142 includes a body 174. In one or more examples, the base end 108 of the robotic manipulator 104 is supported by and coupled to the body 174. In one or more examples, the base vacuum gripper 148 is coupled to and extends from the body 174 of the base 142.

As illustrated in Fig. 13, in one or more examples, the system 100 includes one or more anchors 168. The anchors 168 assist with supporting the base 142 before and/or after coupling the base 142 to the surface 116 of the workpiece 114. The anchors 168 can be coupled to the base 142, such as to anchor supports 172 (Fig. 12) coupled to the body 174 of the base 142.

Referring to Fig. 1, in one or more examples, the base vacuum clamp 144 includes a base vacuum ejector 150. The base vacuum ejector 150 is coupled to and in fluid communication with the base vacuum gripper 148, such as via airlines. The base vacuum ejector 150 is configured to reverse a flow of air to the base vacuum gripper 148 to release or "break" the vacuum connection between the base vacuum gripper 148 and the surface 116 of the workpiece 114.

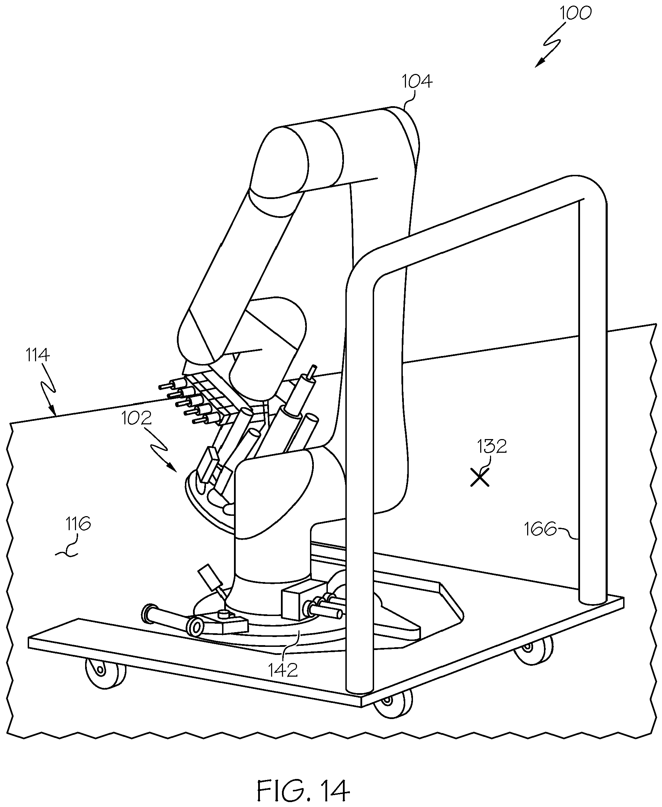

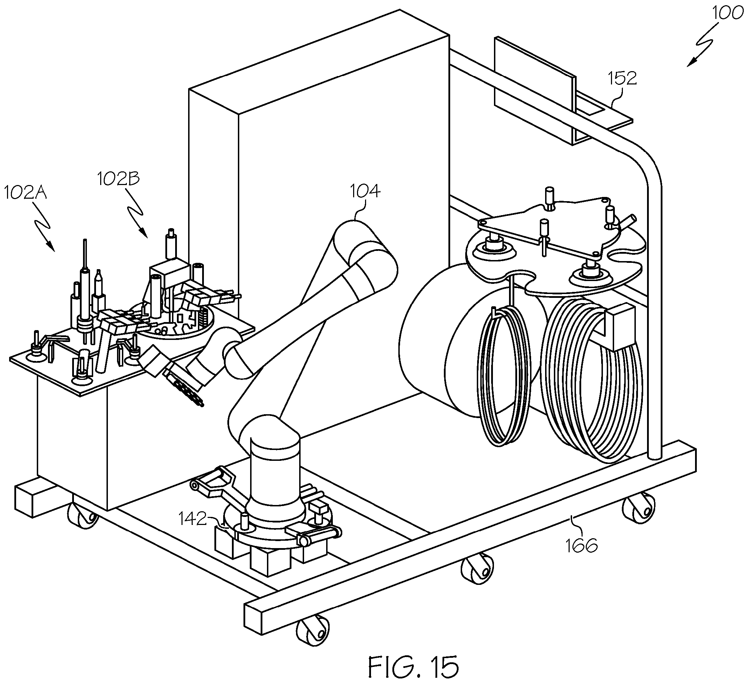

Referring to Figs. 14 and 15, in one or more examples, the system 100 includes a cart 166. In one or more examples, the cart 166 supports and enables movement of the robotic manipulator 104, or the robotic manipulator 104 and the base 142, relative to the workpiece 114. In one or more examples, the cart 166 is a wheeled vehicle that is drawn or pushed by a human operator. In one or more examples, the cart 166 is an automated guided vehicle.

In one or more examples, as illustrated in Fig. 14, the cart 166 is configured to be supported on the workpiece 114 and to move across the surface 116 of the workpiece 114 to locate the base 142 and the robotic manipulator 104 proximate to the processing location 132. Upon positioning the robotic manipulator 104 at a suitable location relative to the processing location 132, such as within reach by robotic manipulator 104, the base 142 is coupled to the surface 116 of the workpiece 114 to support the robotic manipulator 104 during positioning and coupling of the end effector 102 to the workpiece 114. Upon the base 142 being coupled to the surface 116 of the workpiece 114 and the robotic manipulator 104 being fixed in a working position, the cart 166 is removed.

In one or more examples, as illustrated in Fig. 15, the cart 166 is configured to move relative to the workpiece 114 to locate the robotic manipulator 104 proximate to the processing location 132 and to support the robotic manipulator 104 during positioning of the end effector 102 and coupling of the end effector 102 to the workpiece 114. As an example, the cart 166 positions the robotic manipulator 104 at a suitable location relative to the processing location 132, such as within reach by robotic manipulator 104, and fixes the robotic manipulator 104.

In one or more examples, the cart 166 serves as a transportation mechanism for the base 142 and the robotic manipulator 104. In one or more examples, the cart 166 serves as the base 142. For example, the base end 108 of the robotic manipulator 104 is coupled to the cart 166 and the cart 166 supports the robotic manipulator 104 during positioning of the end effector 102, during coupling of the end effector 102 to the surface 116 of the workpiece 114, and during the processing operation. In one or more examples, as illustrated in Fig. 15, the cart 166 supports various other components of the system 100, such as a plurality of end effectors 102 that are interchangeably attachable to the robotic manipulator 104 (e.g., interchangeable instances of a first end effector 102A and a second end effector 102B), communication lines (e.g., air lines, vacuum lines, electrical lines, etc.), computer control systems (e.g., a controller), and the like. For example, the system 100 includes the first end effector 102A that includes the machine tool 112 (e.g., drill) and end-effector vacuum clamp 118 configured to drill the holes 178 and the second end effector 102B that includes the machine tool 112 (e.g., impact driver) and end-effector vacuum clamp 118 configured to remove the fasteners 180 from the workpiece 114.

Referring to Fig. 1 and to Fig. 15, in one or more examples, the system 100 includes the controller 152. In one or more examples, the controller 152 is coupled to and in electrical communication with one or more of the operational components of the system 100 and/or of the end effector 102. As examples, one or more of the robotic manipulator 104, the end-effector vacuum clamp 118, the machine tool 112, the tool drive 126, the local vision system 128, the regional vision system 130, the base vacuum clamp 144, and the like operate under direction or instruction from the controller 152. Additionally, in one or more examples, the controller 152 is configured or adapted to process data, such as data and information acquired or generated by the local vision system 128, the regional vision system 130, the end-effector vacuum sensors 208, the base vacuum sensor 226, the position sensor 204, the force sensor 206, the rotary encoder of the machine tool 112, other sensors, and the like.

In one or more examples, the system 100 and, more particularly, the controller 152 may be implemented using software, hardware, firmware, or a combination thereof. When software is used, the operations performed by the system 100 may be implemented using, for example, without limitation, program code configured to run on a processor unit. When firmware is used, the operations performed by the system 100 may be implemented using, for example, without limitation, program code and data and stored in persistent memory to run on a processor unit. When hardware is employed, the hardware may include one or more circuits that operate to perform the operations performed by the system 100. Depending on the implementation, the hardware may take the form of a circuit system, an integrated circuit, an application specific integrated circuit (ASIC), a programmable logic device, or some other suitable type of hardware device configured to perform any number of operations. A programmable logic device may be configured to perform certain operations. The device may be permanently configured to perform these operations or may be reconfigurable. A programmable logic device may take the form of, for example, without limitation, a programmable logic array, a programmable array logic, a field programmable logic array, a field programmable gate array, or some other type of programmable hardware device.

Referring now to Figs. 1-11, by way of examples, the present disclosure is also directed to the end effector 102 for processing the workpiece 114. In one or more examples, the end effector 102 forms a portion of the system 100. In one or more examples, the end effector 102 integrates at least the end-effector vacuum clamp 118 and the machine tool 112 into an end of arm robotic assembly.

Referring to Fig. 1 and to Figs. 2-11, in one or more examples, the end effector 102 is coupleable to (e.g., is configured to be coupled to and decoupled from) the working end 106 of the robotic manipulator 104. The end effector 102 includes the machine tool 112 and the end-effector vacuum clamp 118 that is coupled to the machine tool 112. The end-effector vacuum clamp 118 is releasably coupleable to the surface 116 of the workpiece 114. The processing force Fp is reacted through the end effector 102 and into the workpiece 114.

Referring to Fig. 1 and to Figs. 2-11, in one or more examples, the end-effector vacuum clamp 118 includes the end-effector vacuum source 120 and the end-effector vacuum gripper 122 in fluid communication with the end-effector vacuum source 120. In one or more examples, the end-effector vacuum clamp 118 includes the end-effector vacuum ejector 124.

Referring to Fig. 1 and to Figs. 3-11, in one or more examples, the end effector 102 includes the tool drive 126 to position the processing axis Ap of the machine tool 112 relative to the end-effector vacuum clamp 118 and relative to the surface 116 of the workpiece 114.

Referring to Fig. 1, in one or more examples, the end effector 102 includes the local vision system 128 to determine a location of the processing axis Ap relative to the processing location 132 on the surface 116 of the workpiece 114. In one or more examples, the end effector 102 includes the regional vision system 130 to determine a position (e.g., location and orientation) of the end effector 102 in space, such as relative to the workpiece 114 and, more particularly, relative to the processing location 132 on the surface 116 of the workpiece 114.

Referring to Fig. 1, in one or more examples, the machine tool 112 includes the spindle 134. The machine tool 112 also includes the tool bit 136 that is coupled to the spindle 134.

Referring to Fig. 1 and to Figs. 3-6 and 9-11, in one or more examples, the end effector 102 includes the extractor 138 to remove debris 158 produced during processing and/or the fastener 180 removed from the workpiece 114.

Referring to Fig. 1 and to Figs. 3-6, in one or more examples, the end effector includes the applicator 140 to dispense the lubricant 160 used during the processing operation.

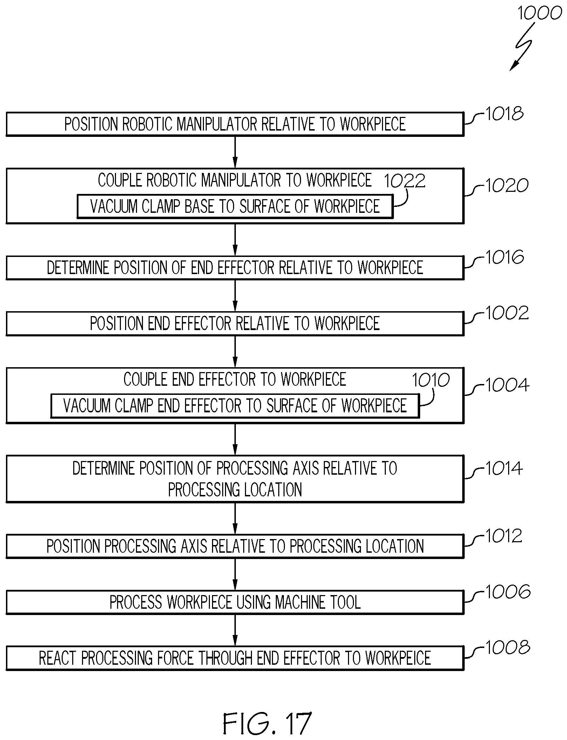

Referring to generally to Figs. 1-16 and particularly to Fig. 17, by way of examples, the present disclosure is further directed to a method 1000 for processing the workpiece 114. In one or more examples, the method 1000 is performed using the system 100 or by automated machinery that utilizes the end effector 102. In one or more examples, the disclosed system 100 and/or the end effector 102 implements at least a portion of the method 1000.

Referring to Fig. 17 and to Figs. 1-16, in one or more examples, the method 1000 includes a step of (block 1002) positioning the end effector 102 relative to the processing location 132 on the surface 116 of the workpiece 114. The method 1000 includes a step of (block 1004) coupling the end effector 102 to the surface 116 of the workpiece 114. The method 1000 includes a step of (block 1006) processing the workpiece 114 at the processing location 132 using the machine tool 112 of the end effector 102. The method 1000 includes a step of (block 1008) reacting the processing force Fp through the end effector 102 and back to the workpiece 114.

Referring to Fig. 17 and to Figs. 1-16, in one or more examples, according to the method 1000, the step of (block 1004) coupling the end effector 102 to the surface 116 of the workpiece 114 includes a step of (block 1010) vacuum clamping the end effector 102 to the surface 116 of the workpiece 114. In one or more examples, the end effector 102 is vacuum clamped to the surface 116 of the workpiece 114 using the end-effector vacuum clamp 118.

Referring to Fig. 17 and to Figs. 1-16, in one or more examples, the method 1000 includes a step of (block 1012) positioning the processing axis Ap of the machine tool 112 relative to the processing location 132 on the surface 116 of the workpiece 114. In one or more examples, the processing axis Ap of the machine tool 112 is positioned relative to the processing location 132 on the surface 116 of the workpiece 114 using macro motion control by positioning the end effector 102 relative to the workpiece 114 using the robotic manipulator 104. In one or more examples, the processing axis Ap of the machine tool 112 is positioned relative to the processing location 132 on the surface 116 of the workpiece 114 using micro motion control by positioning the machine tool 112 relative to the workpiece 114 using the tool drive 126, such as the X-axis drive 196 and/or the Y-axis drive 198).

Referring to Fig. 17 and to Fig. 1, in one or more examples, the method 1000 includes a step of (block 1014) determining a position (e.g., location and orientation) of the processing axis Ap relative to the processing location 132 on the surface 116 of the workpiece 114. In one or more examples, the position of the processing axis Ap is based on a position of the machine tool 112 (e.g., the spindle 134 or the tool bit 136), for example, as determined or detected by the drive sensors 202 (e.g., the position sensor 204). In one or more examples, the position of the processing axis Ap relative to the processing location 132 on the surface 116 of the workpiece 114 is determined using the one or more vision systems 194, such as the regional vision system 130, the local vision system 128, and the controller 152.

Referring to Fig. 12 and to Fig. 1, in one or more examples, the method 1000 includes a step of (block 1016) determining a position (e.g., location and/or orientation) of the end effector 102 relative to the workpiece 114, such as relative to the processing location 132 on the surface 116 of the workpiece 114. In one or more examples, the position of the end effector 102 relative to the processing location 132 on the surface 116 of the workpiece 114 is determined using the regional vision system 130 and the controller 152.

Referring to Fig. 17 and to Figs. 1, 2 and 13-16, in one or more examples, the end effector 102 is coupled to the working end 106 of the robotic manipulator 104. The method 1000 includes a step of (block 1018) positioning the robotic manipulator 104 relative to the workpiece 114. In one or more examples, the robotic manipulator 104 is properly positioned relative to the workpiece 114 using the cart 166.

Referring to Fig. 17 and to Figs. 1, 2, 12-14 and 16, in one or more examples, the method 1000 includes a step of (block 1020) coupling the robotic manipulator 104 to the surface 116 of the workpiece 114. In one or more examples, the base end 108 of the robotic manipulator 104 is coupled to the base 142. According to the method 1000, the step of (block 1020) coupling the robotic manipulator 104 to the surface 116 of the workpiece 114 includes a step of (block 1022) vacuum clamping the base 142 to the surface 116 of the workpiece 114. In one or more examples, the base 142 and, thus, the robotic manipulator 104 is vacuum clamped to the surface 116 of the workpiece 114 using the base vacuum clamp 144.

Referring to Fig. 17, in one or more examples, according to the method 1000, the step of (block 1006) processing the workpiece 114 includes a step of a drilling the hole 178 through the surface 116 of the workpiece 114. In one or more examples, according to the method 1000, the step of (block 1006) processing the workpiece 114 includes a step of removing the fastener 180.

The method 1000 can also include one or more pre-processing steps. Generally, the pre-processing steps are performed before the step of (block 1018) positioning the robotic manipulator 104.

In one or more examples, the method 1000 includes a step of determining where to position the robotic manipulator 104 relative to the workpiece 114 for performance of the processing operation (e.g., block 1006). The determined position (e.g., location and orientation) of the robotic manipulator 104 is communicated to the system 100, such as to the controller 152, and/or to a human operator.

In one or more examples, according to the method 1000, the step of (block 1018) positioning the robotic manipulator 104 includes any one of various transporting and/or loading steps. As an example, the system 100, including the robotic manipulator 104, the base 142, the end effector 102, and any umbilical lines are transported using the cart 166 (e.g., as shown in Fig. 15). In one or more examples, an entire assembly of the system 100 (e.g., the robotic manipulator 104, the base 142, the end effector 102) is positioned on the surface 116 of the workpiece 114 (e.g., by a forklift, hand loaded, overhead gantry, etc.) proximate one or more of the processing locations 132 (e.g., as shown in Fig. 16). Once the system 100 is properly positioned in the predetermined location, all umbilical lines (e.g., pneumatic, power, communication, vacuum, etc.) are connected. In one or more examples, if the end effector 102 is not connected to the robotic manipulator 104 before positioning (e.g., block 1018), then the method 1000 includes a step of coupling the end effector 102 to the robotic manipulator 104. The system 100 is then powered on and system checks are performed.

In one or more examples, according to the method 1000, the step of (block 1016) determining the position of the end effector 102 and/or the step of (block 1014) determining the position of the processing axis Ap is performed by scanning the surrounding area using one or more of the vision systems 194 (Fig. 1). Position determinations are made based on the input from the vision systems 194.

In one or more examples, the method 1000 also includes a step of determining the position (e.g., location and orientation) of the processing location 132, such as a location where the hole 178 is to be drilled or a location of the fastener 180 to be removed. In one or more examples, the position of the processing location 132 is determined by scanning the surrounding area using one or more of the vision systems 194. In one or more examples, one or more of the vision systems 194 is configured to identify a drilling location and/or individual fasteners.

In one or more examples, the method 1000 includes a step of planning motion of the robotic manipulator 104 to properly position the end effector 102 for one or more processing operations. In one or more examples, motion planning is performed and implemented using the controller 152. In one or more examples, motion planning also includes determining a sequence of operations, such as a sequence of the fasteners 180 to be removed or the sequence of holes 178 to be drilled with the robotic manipulation at a given position relative to the workpiece 114.

In one or more examples, the step of (block 1002) positioning the end effector 102 is gross motion control and is performed using the robotic manipulator 104 to move the end effector 102 and, thus, the machine tool 112 proximate (e.g., close to) the processing location 132. In one or more examples, the step of (block 1012) positioning the processing axis Ap is fine motion control, is performed after positioning the end effector 102, and is performed using the tool drive 126 to move the machine tool 112 over (e.g., align with) the processing location 132. In one or more examples, the step of (block 1012) positioning the processing axis Ap is fine motion control, is performed after gross positioning of the end effector 102 and is performed using the robotic manipulator 104 to move the machine tool 112 over the processing location 132.

In one or more examples, the method 1000 includes a step of identifying the fastener 180, such as a type, style, or configuration of the fastener 180. In one or more examples, fastener identification is performed using one or more of the visions systems 194. In one or more examples, one or more of the vision systems 194 is configured to sync on or determine a type of the fastener 180. In one or more examples, one or more of the vision systems 194 is configured to compare the detected one of the fasteners 180 with a catalog of possible ones of the fasteners 180. In one or more examples, one or more of the vision systems 194 is configured to determine whether the fastener 180 is located within a fastener hole or whether the fastener hole is empty. In one or more examples, one or more of the vision systems 194 is configured to determine a diameter of the fastener 180. Examples of the types of fasteners 180 that may be identified by one or more of the vision systems 194 include, but are not limited to, coin slot fasteners, open holes, hex recess hi-loc fasteners, lush fasteners, Jo-bolt, Eddie-Bolt^{®} or OSI-Bolt^{®} fasteners, and the like.

In one or more examples, the method 1000 includes a step of checking the tool bit 136 to confirm that the tool bit 136 loaded in the machine tool 112 is correct for the processing operation, such as the correct driver bit for removal of the fastener 180 or the correct drill bit for drilling the hole 178.

In one or more examples, the step of (block 1002) positioning the end effector 102 includes a step of moving the end effector 102, using the robotic manipulator 104, such that the machine tool 112 is generally over the processing location 132 (e.g., the fastener location or the drilling location). As an example, the end effector 102 is positioned such that a center of the opening 216 is approximately aligned with a center line of the processing location 132. Generally, the processing axis Ap is aligned or coincident with the center of the opening 216. As another examples, the end effector 102 is positioned such that the end-effector vacuum clamp 118 is in contact with the surface 116 of the workpiece 114.

In one or more examples, the step of (block 1004) coupling the end effector 102 to the workpiece 114, for example, vacuum clamping the end effector 102 (e.g., block 1010) is performed after the step of (block 1002) positioning the end effector 102. In these examples, the step of (block 1014) positioning the processing axis Ap is performed after the step of (block 1004) coupling the end effector 102 to the surface 116 of the workpiece 114 and is performed using the tool drive 126, such as the X-axis drive 196 and/or the Y-axis drive 198 for fine motion control. In these examples, the machine tool 112 is extended along the feed axis by the tool drive 126, such as the Z-axis drive 200, such that the tool bit 136 engages the workpiece 114 for the step of (block 1006) processing the workpiece 114 (e.g., drilling the hole 178 or removing the fastener 180).

In some examples, tool drive 126 may not include the fine motion control drives, such as the X-axis drive 196 and the Y-axis drive 198, due to weight or size limitations for the system 100 and/or the end effector 102. In these examples, the step of (block 1014) positioning the processing axis Ap is performed after the step of (block 1002) positioning the end effector 102 and before the step of (block 1004) coupling the end effector 102 to the workpiece 114. In these examples, the machine tool 112 is extended along the feed axis by the tool drive 126, such as the Z-axis drive 200, such that the tool bit 136 engages the workpiece 114 for the step of (block 1006) processing the workpiece 114 (e.g., removing the fastener 180). As an example, the machine tool 112 is extended with a light force until the tool bit 136 contacts the head of the fastener 180. In these examples, one or more of the drive sensors 202 (e.g., force sensor 206) may indicate that contact has occurred. The machine tool 112 then slowly rotates the tool bit 136 with a low torque until the tool bit 136 is successfully engaged with the head of the fastener 180. As an example, one or more of the drive sensors 202 detects when rotation stops, when torque increases, and/or forward extension along the feed axis as an indication of successful engagement. If rotation continues without stopping, one or more of the drive sensors 202 may indicate an issue, such as stripped threads, damaged head of the fastener, and the like, which is to be addressed by an operator. In these examples, the step of (block 1004) coupling the end effector 102 to the workpiece 114, for example, vacuum clamping the end effector 102 (e.g., block 1010) is performed after successful engagement of the tool bit 136 and the fastener 180.

In one or more examples, the step of (block 1010) vacuum clamping the end effector 102 to the surface 116 of the workpiece 114 includes engaging the end-effector vacuum gripper 122, such as the vacuum pad 190 or the suction cups 186, with the surface 116. During compression of the end-effector vacuum gripper 122, the end effector 102 moves toward the surface 116, such as approximately 10 mm to 20 mm depending on the configuration of the end-effector vacuum gripper 122. The tool drive 126, such as the variable force implementation of the Z-axis drive 200, is set in a low force mode to enable extension of the machine tool 112 along the feed axis and to accommodate compression of the end-effector vacuum gripper 122.

In one or more examples, the method 1000 includes a step of checking the vacuum. The vacuum is checked using the end-effector vacuum sensor 208 to ensure sufficient vacuum for reacting to the processing force Fp. In one or more examples, the step of checking the vacuum is performed regularly or continuously throughout the step of (block 1006) processing the workpiece 114.

In one or more examples in which the step of (block 1006) processing the workpiece 114 is removing the fastener 180, during removal of the fastener 180, a thrust force on the spindle 134 is increased and monitored using one or more of the drive sensors 202 (e.g., force sensor 206). While applying the increased thrust force, the machine tool 112 rotates the fastener 180 and monitors torque and force. Feedback is provided during the process to determine if an error has occurred during removal, such as when the tool bit 136 rotates without an associated retraction of the machine tool 112 along the feed axis, which may indicate disengagement of the tool bit 136 or damage to the head of the fastener 180. Feedback is also provided during the process to determine when the fastener 180 has been completely disengaged (e.g., unscrewed) from the workpiece 114, such as when the tool bit 136 rotates without continued travel of the fastener 180. When the fastener 180 rotates easily without excess torque, impacts, and axial movement of the fastener 180, then removal is complete and the machine tool 112 retracts along the feed axis to a start or high clearance position. In one or more examples, once the fastener 180 is completely disengaged from the workpiece 114, the grasper 210 engages the fastener 180 and pulls the loosened instance of the fastener 180 from the hole and positions the fastener 180 for removal by the extractor 138.

Accordingly, examples of the system 100, the end effector 102, and the method 1000 disclosed herein provide improvements in collaborative robot mounting technology, techniques for mounting cobots to a variety of surfaces, improvement in end effector automated clamp-up technology, unique vacuum grippers that accommodate complex curved or other geometries, reacting to process forces to structure that enable lightweight collaborative robots to perform operations traditionally done by large industrial robots, micro-positioning actuators, miniaturization of drilling, countersinking, and fastener removal end effector, hole/fastener identification, use of vision systems to identify hole locations and micro adjust end effectors, and automated scan and plan user interface and software solutions.

In one or more examples, the system 100 and method 1000 replace tasks that are generally done manually or with large automation systems with a small and portable collaborative robotic system. The system 100 and method 1000 are capable of completing a multi-step fastener removal process that is difficult to automate. The system 100 includes a quick-change interface from the robotic manipulator 104, capability to find existing fastener locations, determine fastener type, align to special coin slot fasteners and engage a driver bit, use of vacuum to hold the end effector 102 to the workpiece 114 to react forces or torques of the processing (e.g., fastener removal or drilling) process, use of an impact driver to release the fastener, pull fastener from the hole, and remove/dispose of the fastener when complete.

In one or more examples, the cart 166 that supports an entirety of the system 100 (e.g., electrical components, robot, multiple end effectors, support equipment, and required safety systems) while personnel can move it around a manufacturing environment to the various job sites. The system 100 can perform the work mounted from the cart 166 or has vacuum clamp tooling (e.g., end-effector vacuum gripper 122 and base vacuum gripper 148) that enables suction to the workpiece 114 and mounting of the robotic manipulator 104 on the surface 116 for larger workpieces 114. Once the robotic manipulator 104 is position close to the processing location where work is to be done, the system 100 utilizes one or more of the vision systems 194 to locate the end effector 102 relative to the workpiece 114, as well as all the processing locations 132 within the reach of the robotic manipulator 104. The system 100 can determine which fasteners 180 need to be removed as well as removal process based on fastener type. When the end effector 102 is positioned over the processing location 132 (e.g., the fastener 180 to be removed), the robotic manipulator 104 centers the end effector 102 over the processing location 132, vacuums down with the unique implementation of the end-effector vacuum gripper 122, finds and aligns the tool bit 136 with the processing location 132 (e.g., the fastener head slot), clamps down with high force on the fastener 180, engages an impact driver that hammers out the fastener 180, determines when to stop spinning driver bit, grabs fastener with the grasper 210 (e.g., removal fingers), pulls the fastener 180 with cured sealant out of the hole, extends the extractor 138 vacuum system, releases the fastener 180, vacuums the fastener 180 away from the workpiece 114, and detects that the fastener 180 has made it through the vacuum system of the extractor 138.

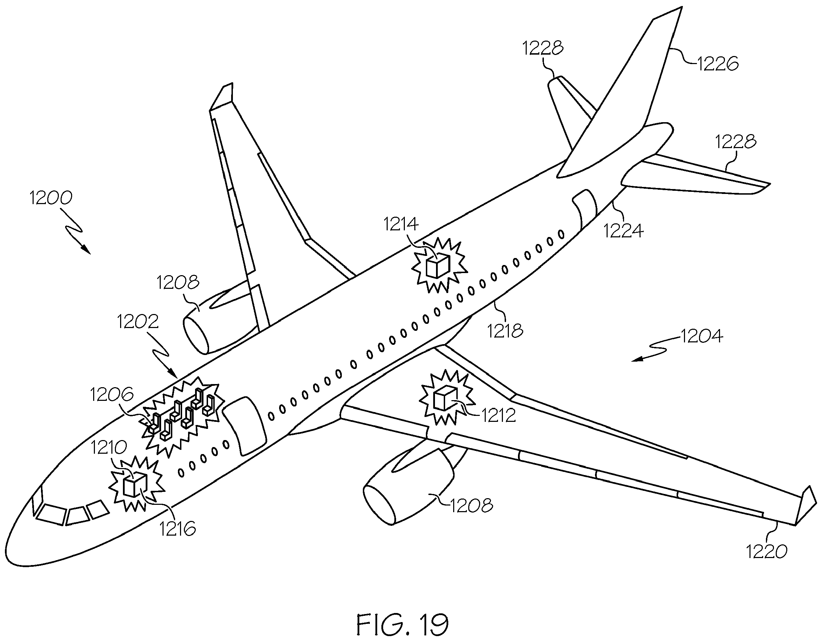

The present disclosure is also directed to examples of the workpiece 114 that is fabricated, machined, or otherwise processed using the system 100 or the end effector 102 or according to the method 1000. The present disclosure is also directed to examples of a portion of an aircraft 1200 (Fig. 19), such as a wing 1220, that is fabricated, machined, or otherwise processed using the system 100 or the end effector 102 or according to the method 1000.

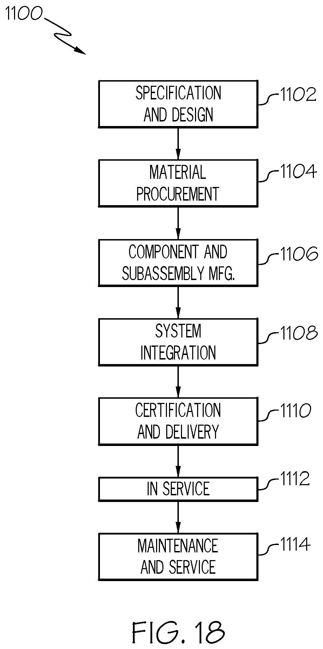

Referring now to Figs. 18 and 19, examples of the system 100, the end effector 102, and the method 1000 described herein, may be related to, or used in the context of, an aircraft manufacturing and service method 1100, as shown in the flow diagram of Fig. 18 and the aircraft 1200, as schematically illustrated in Fig. 19. For example, the aircraft 1200 and/or the aircraft production and service method 1100 may include the workpiece 114 (Fig. 1-4, 7, 8, 13, 14 and 16), such as a fuselage 1218, wings 1220, tail section 1224, horizontal stabilizers 1228, vertical stabilizer 1226, and the like, fabricated, machined, or otherwise processed using the system 100 or the end effector 102 and/or according to the method 1000.

Referring to Fig. 19, which illustrates examples of the aircraft 1200. The aircraft 1200 includes an airframe 1202 having an interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, environmental systems 1214, and/or communication systems 1216. In other examples, the onboard systems 1204 also includes one or more control systems coupled to an airframe 1202 of the aircraft 1200, such as for example, flaps, spoilers, ailerons, slats, rudders, elevators, and trim tabs. In yet other examples, the onboard systems 1204 also includes one or more other systems, such as, but not limited to, communications systems, avionics systems, software distribution systems, network communications systems, passenger information/entertainment systems, guidance systems, radar systems, weapons systems, and the like.

Referring to Fig. 18, during pre-production of the aircraft 1200, the service method 1100 includes specification and design of the aircraft 1200 (block 1102) and material procurement (block 1104). During production of the aircraft 1200, component and subassembly manufacturing (block 1106) and system integration (block 1108) of the aircraft 1200 take place. Thereafter, the aircraft 1200 goes through certification and delivery (block 1110) to be placed in service (block 1112). Routine maintenance and service (block 1114) includes modification, reconfiguration, refurbishment, etc. of one or more systems of the aircraft 1200.

Each of the processes of the service method 1100 illustrated in Fig. 18 may be performed or carried out by a system integrator, a third party, and/or an operator (e.g., a customer). For the purposes of this description, a system integrator may include, without limitation, any number of spacecraft manufacturers and major-system subcontractors; a third party may include, without limitation, any number of vendors, subcontractors, and suppliers; and an operator may be an airline, leasing company, military entity, service organization, and so on.

Examples of the system 100, the end effector 102, and the method 1000 shown and described herein, may be employed during any one or more of the stages of the manufacturing and service method 1100 shown in the flow diagram illustrated by Fig. 18. In an example, a portion of the aircraft 1200 (e.g., the workpiece 114) fabricated, machined, or processed using the system 100, the end effector and/or according to the method 1000 may form a portion of component and subassembly manufacturing (block 1106) and/or system integration (block 1108). Further, a portion of the aircraft 1200 (e.g., the workpiece 114) fabricated, machined, or processed using the system 100, the end effector and/or according to the method 1000 may be implemented in a manner similar to components or subassemblies prepared while the aircraft 1200 is in service (block 1112). Also, a portion of the aircraft 1200 (e.g., the workpiece 114) fabricated, machined, or processed using the system 100, the end effector and/or according to the method 1000 may be utilized during system integration (block 1108) and certification and delivery (block 1110). Similarly, a portion of the aircraft 1200 (e.g., the workpiece 114) fabricated, machined, or processed using the system 100, the end effector and/or according to the method 1000 may be utilized, for example and without limitation, while the aircraft 1200 is in service (block 1112) and during maintenance and service (block 1114).

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of', when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of' may be, for example, without limitation, two of item A, one of item B, and ten of item C; four of item Band seven of item C; and other suitable combinations. As used herein, the term "and/or" and the "j" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represent a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1-16 and 19, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1-11 and 14, referred to above, need be included in every example and not all elements, features, and/or components described herein are necessarily depicted in each illustrative example. Accordingly, some of the elements, features, and/or components described and illustrated in Figs. 1-16 and 19 may be combined in various ways without the need to include other features described and illustrated in Figs. 1-16 and 19, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1-16 and 19, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1-16 and 19, and such elements, features, and/or components may not be discussed in detail herein with reference to each of Figs. 1-16 and 19. Similarly, all elements, features, and/or components may not be labeled in each of Figs. 1-16 and 19, but reference numerals associated therewith may be utilized herein for consistency.

In Figs. 17 and 18, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 17 and 18 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but do not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the system 100, the end effector 102, and the method 1000 have been shown and described, modifications may occur to those skilled in the art upon reading the specification. The present application includes such modifications and is limited only by the scope of the claims.

Further, the current disclosure comprises embodiments according to the following clauses:
1. A system comprising:
   a robotic manipulator comprising a working end; and
   an end effector coupled to the working end of the robotic manipulator,
   wherein:
      the end effector comprises:
      a machine tool; and
      an end-effector vacuum clamp coupled to the machine tool;
      the end effector is releasably coupleable to a surface of a workpiece; and
      a processing force is reacted through the end effector and to the workpiece.
2. The system of Clause 1, wherein the end-effector vacuum clamp comprises:
   an end-effector vacuum source; and
   an end-effector vacuum gripper in fluid communication with the end-effector vacuum source.
3. The system of Clause 1 or 2, wherein the end-effector vacuum clamp further comprises an end-effector vacuum ejector.
4. The system of any of Clauses 1 to 3, further comprising a tool drive to position a processing axis of the machine tool relative to the end-effector vacuum clamp.
5. The system of Clause 4, further comprising a local vision system to determine a location of the processing axis relative to a processing location on the surface of the workpiece.
6. The system of any of Clauses 1 to 5, further comprising a regional vision system to determine a location of the end effector relative to a processing location on the surface of the workpiece.
7. The system of any of Clauses 1 to 6, wherein the machine tool comprises:
   a spindle; and
   a tool bit coupled to the spindle.
8. The system of any of Clauses 1 to 7, further comprising at least one of:
   an extractor to remove at least one of debris produced during processing and a fastener removed from the workpiece; and
   an applicator to dispense lubricant.
9. The system of any of Clauses 1 to 8, further comprising a base,
   wherein:
   the robotic manipulator further comprises a base end;
   the base end of the robotic manipulator is coupled to the base;
   the base is movable relative to the workpiece; and
   the base is releasably coupleable to the surface of the workpiece.
10. The system of Clause 9, wherein:
   the base comprises a base vacuum clamp; and
   the base vacuum clamp comprises:
      a base vacuum source;
      a base vacuum gripper in fluid communication with the base vacuum source; and
      a base vacuum ejector.
11. The system of any of Clauses 1 to 10, wherein the robotic manipulator is a collaborative robot.
12. An end effector comprising:
   a machine tool; and
   an end-effector vacuum clamp coupled to the machine tool,
   wherein:
      the end-effector vacuum clamp is releasably coupleable to a surface of a workpiece; and
      a processing force is reacted through the end effector and into the workpiece.
13. The end effector of Clause 12, wherein the end-effector vacuum clamp comprises:
   an end-effector vacuum source;
   an end-effector vacuum gripper in fluid communication with the end-effector vacuum source; and
   an end-effector vacuum ejector.
14. The end effector of Clause 12 or 13, further comprising:
   a tool drive to position a processing axis of the machine tool relative to the end-effector vacuum clamp; and
   a local vision system to determine a location of the processing axis relative to a processing location on the surface of the workpiece.
15. The end effector of any of Clauses 12 to 14, further comprising at least one of:
   an extractor to remove at least one of debris produced during processing and a fastener removed from the workpiece; and
   an applicator to dispense lubricant.
16. A method for processing a workpiece, the method comprising steps of:
   positioning an end effector relative to a processing location on a surface of the workpiece;
   coupling the end effector to the surface of the workpiece;
   processing the workpiece at the processing location using a machine tool of the end effector; and
   reacting a processing force through the end effector and to the workpiece.
17. The method of Clause 16, wherein the step of coupling the end effector to the surface of the workpiece comprise vacuum clamping the end effector to the surface of the workpiece.
18. The method of Clause 16 or 17, further comprising positioning a processing axis of the machine tool relative to the processing location on the surface of the workpiece.
19. The method of Clause 18, further comprising:
   determining a location of the end effector relative to the processing location on the surface of the workpiece; and
   determining a location of the processing axis of the machine tool relative to the processing location on the surface of the workpiece.
20. The method of any of Clauses 16 to 19, wherein the step of processing the workpiece comprises drilling a hole in the workpiece.
21. The method of any of Clauses 16 to 20, wherein the step of processing the workpiece comprises removing a fastener from the workpiece.
22. The method of any of Clauses 16 to 21, wherein:
   the end effector is coupled to a working end of a robotic manipulator; and
   the method further comprises a step of coupling the robotic manipulator to the surface of the workpiece;
   a base end of the robotic manipulator is coupled to a base; and
   the step of coupling the robotic manipulator to the surface of the workpiece comprises vacuum clamping the base to the surface of the workpiece.

## Claims

1. An end effector (102) comprising:
a machine tool (112); and
an end-effector vacuum clamp (118) coupled to the machine tool (112),
wherein:
the end-effector vacuum clamp (118) is releasably coupleable to a surface (116) of a workpiece (114); and
a processing force (Fp) is reacted through the end effector (102) and into the workpiece (114).

2. The end effector (102) of Claim 1, wherein the end-effector vacuum clamp (118) comprises:
an end-effector vacuum source (120);
an end-effector vacuum gripper (122) in fluid communication with the end-effector vacuum source (120); and
an end-effector vacuum ejector (124).

3. The end effector (102) of Claim 1 or 2, further comprising:
a tool drive (126) to position a processing axis (Ap) of the machine tool (112) relative to the end-effector vacuum clamp (118); and
a local vision system (128) to determine a location of the processing axis (Ap) relative to a processing location (132) on the surface (116) of the workpiece (114).

4. The end effector (102) of any of Claims 1 to 3, further comprising at least one of:
an extractor (138) to remove at least one of debris (158) produced during processing and a fastener (180) removed from the workpiece (114); and
an applicator (140) to dispense lubricant (160).

5. A system (100) comprising:
a robotic manipulator (104) comprising a working end (106); and
an end effector (102) according to any of claims 1 to 4, coupled to the working end (106) of the robotic manipulator (104).

6. The system (100) of Claim 5, further comprising a regional vision system (130) to determine a location of the end effector (102) relative to a processing location (132) on the surface (116) of the workpiece (114).

7. The system (100) of Claim 5 or 6, wherein the machine tool (112) comprises:
a spindle (134); and
a tool bit (136) coupled to the spindle (134).

8. The system (100) of any of Claims 5 to 7, further comprising at least one of:
an extractor (138) to remove at least one of debris (158) produced during processing and a fastener (180) removed from the workpiece (114); and
an applicator (140) to dispense lubricant (160).

9. The system (100) of any of Claims 5 to 8, further comprising a base (142),
wherein:
the robotic manipulator (104) further comprises a base end (108);
the base end (108) of the robotic manipulator (104) is coupled to the base (142);
the base (142) is movable relative to the workpiece (114); and
the base (142) is releasably coupleable to the surface (116) of the workpiece (114).

10. The system (100) of Claim 9, wherein:
the base (142) comprises a base vacuum clamp (144); and
the base vacuum clamp (144) comprises:
a base vacuum source (146);
a base vacuum gripper (148) in fluid communication with the base vacuum source (146); and
a base vacuum ejector (150).

11. The system (100) of any of Claims 1 to 10, wherein the robotic manipulator (104) is a collaborative robot (154).

12. A method (1000) for processing a workpiece (114), the method (1000) comprising steps of:
positioning an end effector (102) relative to a processing location (132) on a surface (116) of the workpiece (114);
coupling the end effector (102) to the surface (116) of the workpiece (114);
processing the workpiece (114) at the processing location (132) using a machine tool (112) of the end effector (102); and
reacting a processing force (Fp) through the end effector (102) and to the workpiece (114).

13. The method of Claim 12, wherein the step of coupling the end effector to the surface of the workpiece comprise vacuum clamping the end effector to the surface of the workpiece.

14. The method of Claim 12 or 13, further comprising positioning a processing axis of the machine tool relative to the processing location on the surface of the workpiece.

15. The method of Claim 14, further comprising:
determining a location of the end effector relative to the processing location on the surface of the workpiece; and
determining a location of the processing axis of the machine tool relative to the processing location on the surface of the workpiece.
